# EUROPÄISCHE PATENTSCHRIFT

(11) **EP 2 807 406 B1**
(45) Veröffentlichungstag und Bekanntmachung des Hinweises auf die Patenterteilung: **19.04.2017**
(21) Anmeldenummer: 12797707.2
(22) Anmeldetag: 28.11.2012
(51) Int. Cl.: F16H 61/02, F16H 61/30, F16K 31/06

(54) **ANORDNUNG ZUR ANSTEUERUNG EINES DOPPELTWIRKENDEN SCHALTZYLINDERS EINER SCHALTANORDNUNG EINES AUTOMATISIERTEN GETRIEBES EINES KRAFTFAHRZEUGES**
ASSEMBLY FOR ACTUATING A DOUBLE-ACTING SHIFT CYLINDER OF A SHIFT ASSEMBLY OF AN AUTOMATIC TRANSMISSION OF A MOTOR VEHICLE
ENSEMBLE PERMETTANT DE COMMANDER UN VÉRIN DE CHANGEMENT DE VITESSE À DOUBLE EFFET D'UN ENSEMBLE DE CHANGEMENT DE VITESSE D'UNE TRANSMISSION AUTOMATIQUE D'UN VÉHICULE AUTOMOBILE

(30) Priorität: 23.01.2012 DE 102012001100
(43) Veröffentlichungstag der Anmeldung: 03.12.2014
(73) Patentinhaber: WABCO GmbH, 30453 Hannover (DE)
(72) Erfinder: KRAFT, Hansjörg, 30453 Hannover (DE); KRÜGENER, Reiner, 30982 Pattensen (DE); MEYER, Ingo, 31547 Rehburg-Loccum (DE)
(74) Vertreter: Lauerwald, Jörg
(86) Internationale Anmeldenummer: PCT/EP2012/004894
(87) Internationale Veröffentlichungsnummer: WO 2013/110302

(56) Entgegenhaltungen:
- EP-A1- 1 241 387
- DE-A1- 19 931 973
- US-A1- 2007 131 883
- US-B1- 8 046 122

## Beschreibung

Die Erfindung betrifft eine Anordnung zur Ansteuerung eines doppelt wirkenden Schaltzylinders einer Schaltanordnung eines automatisierten Getriebes eines Kraftfahrzeuges mit den Merkmalen des Oberbegriffs des Patentanspruchs 1.

Automatisierte Getriebe von Kraftfahrzeugen, insbesondere von Nutzfahrzeugen, weisen in der Regel aus einzeln handhabbaren Baueinheiten bestehende Anordnungen zur Ansteuerung wenigstens eines doppeltwirkenden Schaltzylinders einer Schaltanordnung eines automatisierten Getriebes eines Kraftfahrzeuges auf. Solche Anordnungen sind beispielsweise aus der DE 10 2005 015 481 A1 und der DE 199 50 443 A1 bekannt. Die Anordnungen weisen wenigstens zwei Schaltventile auf, durch welche ein doppelt wirkender Schaltzylinder mit pneumatischen oder hydraulischen Druck beaufschlagbar ist. Eine Kolbenstange eines Kolbens des Schaltzylinders ist in der Regel mit einer Schaltklaue, einem Schaltfinger oder einem ähnlichen Betätigungsglied verbunden, durch welche im Bedarfsfalle eine Gasse eines Getriebes schaltbar ist. Eine wechselweise Ansteuerung der Schaltventile sorgt dafür, dass ein Druckraum des Schaltzylinders mit hydraulischem Druck beaufschlagt wird, während der andere Druckraum des Schaltzylinders entlüftet wird, dass heißt, aus jenem Druckraum wird pneumatischer oder hydraulischer Druck abgebaut, wobei im Falle von hydraulischen Systemen die Hydraulikflüssigkeit über einen Rücklauf in einen Hydraulikflüssigkeitsspeicher zurückgeleitet wird.

Die Schaltzylinder sind in der Regel als doppelt wirkende Zylinder in Form von Differentialzylindern ausgebildet und weisen entsprechend jeweils einen Kolben mit zwei verschieden großen Wirkflächen auf, da nur eine Wirkfläche des Kolbens mit einer Kolbenstange verbunden ist.

Im Fall von hydraulischen Anordnungen ist regelmäßig ein Druckbegrenzungsventil vorgesehen, das dafür Sorge trägt, dass bei einem Überdruck die Druckversorgungsleitung mit dem Rücklauf verbunden wird, so dass dann ein möglicherweise schädlicher Überdruck aus dem System genommen wird. Andernfalls könnte es zum Platzen von Hydraulikleitungen oder zur Beschädigung der Schaltventile bzw. des Schaltzylinders kommen.
Solche gefährlichen Überdruck-Situationen können sich dann einstellen, wenn auf Grund eines mechanischen oder elektronischen Fehlers der Motor der Hydraulikpumpe dauernd bestromt wird, so dass dann ständig Hydraulikflüssigkeit in die Druckversorgungsleitung gepumpt wird.

Daher ist es allgemein üblich, ein Druckbegrenzungsventil in eine entsprechende Anordnung mit einzubauen, was beispielsweise aus gattungsgemäße DE 199 31 973 A1 und der DE 10 2006 031 380 A1 bekannt ist.

Aus der DE 10 2006 058 913 A1 ist eine Anordnung gemäß der dortigen Figur 1 bekannt, bei der kein Druckbegrenzungsventil vorgesehen ist. Eine derartige Anordnung bietet keinen Schutz vor hydraulischem Überdruck.

Die zuvor beschriebenen Anordnungen, bei denen Druckbegrenzungsventile eingesetzt werden, haben sich in Praxi weitgehend bewährt. Jedoch kann auch das dort vorgesehene Überdruckventil in Extremfällen eine Fehlerquelle darstellen. Das Überdruckventil ist regelmäßig so ausgelegt, dass es im Normalbetrieb außer Funktion gesetzt ist, und nur im extremen Ausnahmefall geschaltet wird, so dass es im Notfall seiner Funktion gerecht werden kann. Derlei Extremfälle, bei denen das System einen unnatürlich hohen Hydraulikdruck ausgesetzt ist, sind glücklicherweise äußerst selten. Da die entsprechenden Überdruckventile aber im Normalfall über mehrere Jahre nicht betätigt werden, kann es dazu kommen, dass bei Eintreten des Extremfall das Druckbegrenzungsventil nicht mehr funktionsfähig ist, was daran liegen kann, dass durch korrosive oder sonstige Einflüsse Ventilglieder nicht mehr beweglich sind. Dies kann entsprechend zu nicht hinnehmbaren Schäden am System führen, was sich beispielsweise dadurch äußert, dass Hydraulikleitungen platzen oder bei Vorhandensein eines besonders hohen Überdrucks der Schaltzylinder betätigt wird, wodurch ungewollt ein Gang eingelegt oder herausgenommen wird, was mit größeren Schäden am Getriebe und am Fahrzeug einhergeht.

Aufgabe der Erfindung ist es daher, eine Anordnung zur Ansteuerung eines doppelt wirkenden Schaltzylinders einer Schaltanordnung eines automatisierten Getriebes eines Kraftfahrzeuges derart zu verbessern, dass eine Druckbegrenzungsfunktion unter allen Betriebsbedingungen gewährleistet ist. Eine weitere Aufgabe der Erfindung besteht darin, eine Anordnung der genannten Art zu vereinfachen.

Diese Aufgabe wird auf überraschen einfacher Weise mit einer Anordnung gelöst, welche die Merkmale des Patentanspruchs 1 aufweist.

Der Erfindung liegt die überraschende Erkenntnis zu Grunde, dass sich die gestellte Aufgabe dadurch lösen lässt, dass die Funktion des Druckbegrenzungsventils jeweils in die Schaltventile integriert ist. Die Schaltventile sind im Gegensatz zum Stand der Technik, bei welchem regelmäßig einfach aufgebaute 2/2-Ventile eingesetzt sind, als 3/2-Ventile ausgestaltet. Der Überdruckabbau erfolgt also über die als 3/2-Wegeventile ausgebildete Schaltventile, welche normalerweise im System den Gang bzw. die Gasse schalten. Durch die Schaltventile wird also das System direkt gegen einen Bersten abgesichert. Die Konstruktionsweise der 3/2-Wegeventile und deren Anordnung im System ermöglicht es, dass die Ventile den Weg zwischen Druckleitung und Rücklaufleitung freigeben, ohne dass unzulässig hoher Druck im Arbeitszylinder aufgebaut wird. Damit wird verhindert, dass die Arbeitszylinder sich bewegen und damit eine unzulässige Schaltung ausführen.

Dadurch, dass die Schaltventile, welche gemäß der Erfindung die Funktion eines Überdruckventils übernehmen, ständig geschaltet werden, ist es praktisch ausgeschlossen, dass sich die Ventilkörper festsetzen könnten.

Auch die zweite Teilaufgabe wird durch die erfindungsgemäße Ausgestaltung gelöst. Denn dadurch, dass das Druckbegrenzungsventil eingespart werden kann, lässt sich die entsprechende Baueinheit nicht nur preiswerter herstellen, sondern aus kompakter ausgestalten, was insbesondere im Hinblick auf den immer knapper werdenden Bauraum von besonderem Vorteil ist.

Außerdem kann vorgesehen sein, dass bei den 3/2-Wege-Ventilen jeweils zwischen einer für die Druckversorgungsleitung normalerweise geschlossenen Stellung und einer bei Schaltung der Schaltventile für die Druckversorgungsleitung offenen Stellung eine Zwischenstellung vorgesehen ist, bei welcher die Druckversorgungsleitung mit dem Rücklauf und bei welcher das jeweilige 3/2-Wege-Ventil mit einem Arbeitsraum des Schaltzylinders verbunden ist.

In anderen praktischen Weiterbildungen kann vorgesehen sein, dass der Schaltzylinder als Gleichlaufzylinder mit gleichen Wirkflächen ausgebildet ist.

Eine andere Ausgestaltung der Erfindung sieht vor, dass das Schaltventil jeweils einen Ventilkörper mit darin angeordnetem Ventilkolben aufweist, welcher im Normalbetrieb des Schaltventils von einer unteren, normalerweise geschlossenen Position durch einen Schaltmagneten in eine obere, geschlossene Stellung schaltbar ist, wobei im Ventilkörper ein unterer Ventilsitz und ein oberer Ventilsitz vorgesehen sind, durch welche der Rücklauf, die Druckversorgungsleitung und die zu einem Arbeitsraum des Schaltzylinders führende Bohrung miteinander verbindbar bzw. voneinander trennbar sind, wobei eine Druckfeder auf den Ventilkolben wirkt, welche den Ventilkolben bei nicht geschaltetem Zustand und bei normalen Druckverhältnissen gegen den unteren Ventilsitz presst.

Diese Ausgestaltung lässt sich dadurch ergänzen, dass die Druckfeder so eingestellt ist, dass bei Erreichen eines Überdrucks der Ventilkolben von seinem unteren Ventilsitz so abhebt, dass Rücklauf, die Druckversorgungsleitung und die zu einem Arbeitsraum des Schaltzylinders führende Bohrung miteinander verbunden sind.

Es kann gemäß einer praktischen Ergänzung vorgesehen sein, dass die Schaltventile jeweils als Ventilpatronen ausgebildet sind welche in Bohrungen eines Trägerteils einer Baueinheit eingeschraubt sind, wobei die Ventilpatronen jeweils in Verbindung mit dem Rücklauf, der Druckversorgungsleitung und zu jeweils einem Arbeitsraum des Schaltzylinders führenden Bohrungen stehen.

Diese Ausgestaltung lässt sich auch noch dadurch ergänzen, dass der Rücklauf und die Druckversorgungsleitung jeweils als Kanal ausgebildet sind, welche in das Trägerteil eingebohrt sind.

Besonders vorteilhaft ist schließlich eine Ausgestaltung der Erfindung, die sich dadurch auszeichnet, dass in das Trägerteil parallel zu den Ventilpatronen eine Bohrung eingebracht ist, wobei die Kanäle in die Bohrung münden und wobei die Bohrung durch eine Schraube lösbar verschlossen ist.

Die Erfindung wird im Nachfolgenden von bevorzugten Ausführungsbeispielen näher beschrieben. Dabei zeigt:
Fig. 1: ein Schaltbild einer erfindungsgemäßen Anordnung
Fig. 1a: ein Schaltbild einer Anordnung gemäß dem Stand der Technik
Fig. 1b: eine Baueinheit einer Anordnung nach dem Stand der Technik
Fig. 2: ein erstes Ausführungsbeispiel einer Baueinheit einer Anordnung gemäß der Erfindung im Längsschnitt
Fig. 3: ein zweites Ausführungsbeispiel einer Baueinheit der erfindungsgemäßen Anordnung im Längsschnitt, und
Fig. 4: eine Teilansicht eines Schaltventils gemäß der Erfindung

Bevor auf die eigentliche Erfindung eingegangen werden wird, sei kurz der Stand der Technik erläutert, von dem die Erfindung ausgeht.

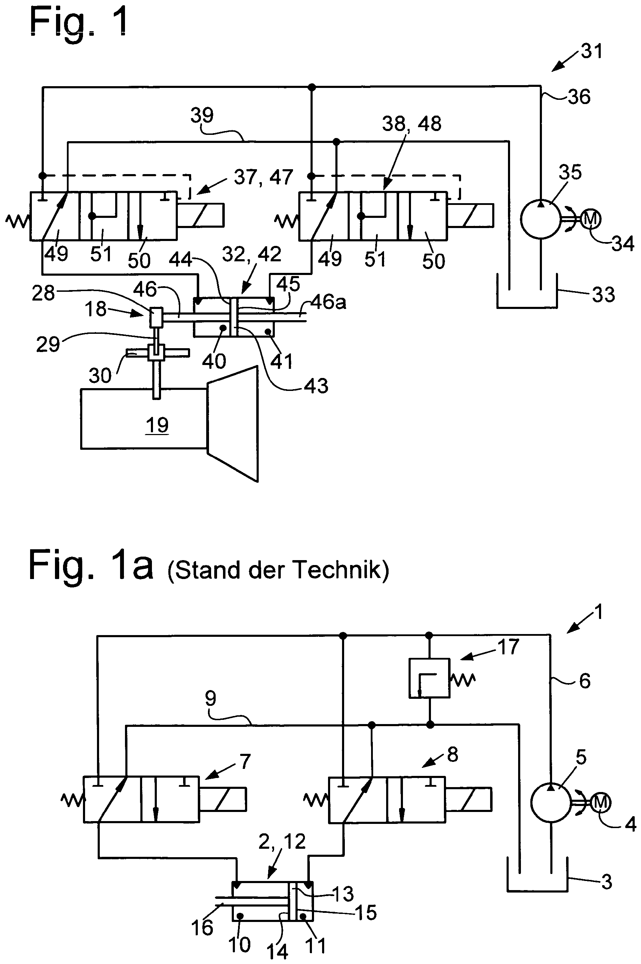

Figur 1a zeigt eine übliche Anordnung 1 zur Ansteuerung eines doppelt wirkenden Schaltzylinders 2 eines in Figur 1a nicht dargestellten automatisierten Getriebes eines Kraftfahrzeuges. Die Anordnung 1 weist einen Hydraulikflüssigkeitsspeicher 3 auf, mit durch einen Elektromotor 4 angetriebene Hydraulikpumpe 5 auf. An die Hydraulikpumpe 5 ist eine Druckversorgungsleitung 6 angeschlossen. Die Druckversorgungsleitung 6 ist jeweils an Schaltventile 7, 8 angeschlossen, welche jeweils als 3/2-Wegeventile ausgebildet sind. An die Schaltventile 7, 8 ist jeweils ein Rücklauf 9 angeschlossen, welcher in den Hydraulik-speicher 3 zurückführt. Die Schaltventile 7, 8 sind jeweils an einen Arbeitsraum 10,11 des Schaltzylinders 2 angeschlossen. Die als Magnetventile ausgebildeten Schaltventile 7, 8 werden im Betrieb wechselweise geschaltet, so dass jeweils ein Arbeitsraum 10 ,11 mit hydraulischem Druck beaufschlagt wird, während der jeweils andere Arbeitsraum 11, 10 drucklos gemacht wird, in dem aus diesem Arbeitsraum 11, 10 Hydraulikflüssigkeit über den Rücklauf 9 in den Hydraulikspeicher 3 zurückgeführt wird.
Der Schaltzylinder 2 nach dem Stand der Technik ist als Differentialzylinder 12 ausgebildet. Entsprechend weist er einen Kolben 13 auf, welcher nur auf einer Seite seiner Kolbenflächen 14, 15 eine Kolbenstange 16 aufweist. Die Kolbenstange 16 ist mit einem nicht dargestellten Stellglied, wie einer Schaltklaue, verbunden.

Zwischen Rücklauf 9 und Druckversorgungsleitung 6 ist ein Druckbegrenzungsventil 17 angeordnet, welches nur dann bestromt wird, wenn das System einen anormalen Überdruck feststellt. In diesem Fall, also bei Vorhandensein eines anormalen Überdrucks, werden Druckversorgungsleitung und Rücklauf miteinander verbunden.

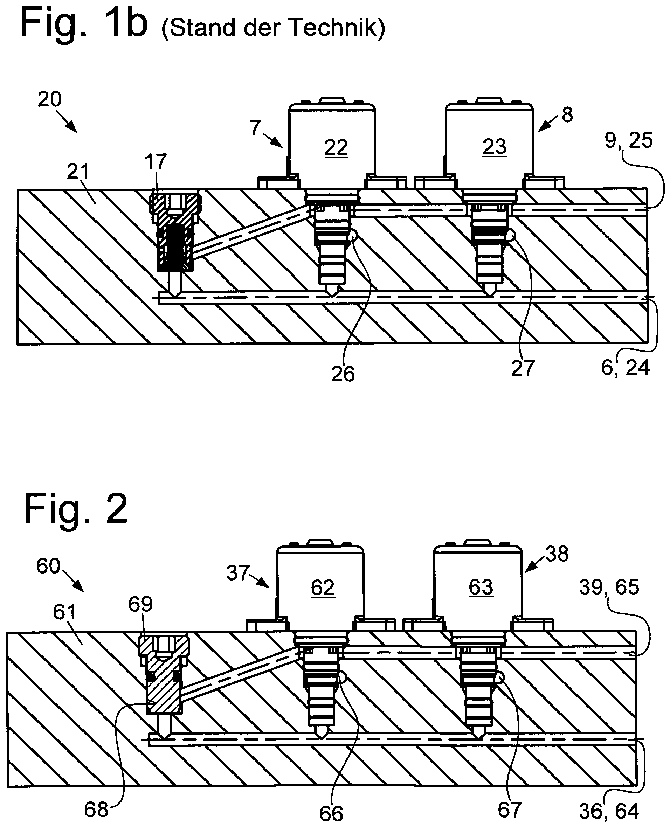

In Fig. 1 b ist eine übliche Baueinheit 20 der Anordnung 1 aus Fig. 1a dargestellt. Diese Baueinheit 20 trägt nur die Schaltventile 7, 8 und das Druckbegrenzungsventil 17; weitere Bestandteile der Baueinheit 20, welche nicht erfindungswesentlich sind, wie die Hydraulikpumpe, eine auf ein Trägerteil 21 aufgesetzte Elektronikeinheit zur Ansteuerung der Schaltventile 7, 8 mit einem Elektronikgehäusedeckel, etc. sind in Fig. 1 b nicht dargestellt.

Die als Magnetventilpatronen 22, 23 ausgebildeten Schaltventile 7, 8 sind in entsprechende Bohrungen des Trägerteils 21 eingeschraubt. Ein in das Trägerteil 21 eingebohrter Kanal 24 bildet die Druckversorgungsleitung 6, während ein Kanal 25 den Rücklauf 9 bildet. Ebenfalls in eine entsprechende Bohrung eingesetzt ist das Druckbegrenzungsventil 17, welches bei Erkennen eines anormalen Überdrucks die Druckversorgungsleitung 6 mit dem Rücklauf 9 verbindet.

Im Bereich der Schaltventile 7, 8 sind jeweils quer zur Druckversorgungsleitung 6 bzw. zum Rücklauf 9 Bohrungen 26, 27 durch das Trägerteil 21 geführt, welche Anschlüsse zu den Arbeitsräumen 10, 11 des Schaltzylinders 2 darstellen. Bei entsprechender Schaltung der Schaltventile 7, 8 wird Hydraulikflüssigkeit in die Bohrungen 26, 27 gepumpt, wodurch die Arbeitsräume 10, 11 des Schaltzylinders 2 mit Hydraulikflüssigkeit beaufschlagt werden.

Die erfindungsgemäße Lösung gemäß den Figuren 1, 2-4 unterscheidet sich von dem zuvor dargestellten Stand der Technik wie folgt:
In Fig. 1 ist ein Schaltbild einer erfindungsgemäßen Anordnung 31 zur Ansteuerung eines ebenfalls doppelt wirkenden Schaltzylinders 32 einer Schaltanordnung 18 eines in Fig. 1 nur angedeuteten automatisierten Getriebes 19 eines in Fig. 1 nicht dargestellten Kraftfahrzeuges in Form eines Nutzfahrzeuges dargestellt. Ebenso wie die Schaltanordnung nach dem Stand der Technik weist die erfindungsgemäße Schaltanordnung einen Hydraulikspeicher 33 und eine durch einen Motor 34 betätigte Hydraulikpumpe 35 auf. Diese ist ebenfalls mit einer Druckversorgungsleitung 36 verbunden. Ebenfalls sind an die Druckversorgungsleitung 36 zwei Schaltventile 37, 38 angeschlossen. Die Schaltventile 37, 38 sind ferner an einen Rücklauf 39 angeschlossen, über welchen Hydraulikflüssigkeit in den Hydraulikspeicher 33 zurückfließen kann. Die Schaltventile 37, 38 sind jeweils mit einem Arbeitsraum 40, 41 des als Gleichlaufzylinders 42 ausgebildeten Schaltzylinders 32 verbunden. Ein Kolben 43 des Gleichlaufzylinders 42 weist zwei Kolbenflächen 44, 45 auf, welche jeweils mit einer Kolbenstange 46, 46a verbunden sind. Eine Kolbenstange 46 ist dabei mit einem nur angedeuteten Stellelement 28 in Form einer Schaltgabel 29 verbunden, durch welche eine ebenfalls nur angedeutete Gasse 30 des Getriebes 19 schaltbar ist.

Vom Stand der Technik unterscheidet sich die erfindungsgemäße Anordnung 31 vor allem durch die Ausgestaltung der Schaltventile 37, 38 und durch die Ausgestaltung des Schaltzylinders 32 als Gleichlaufzylinder 42.

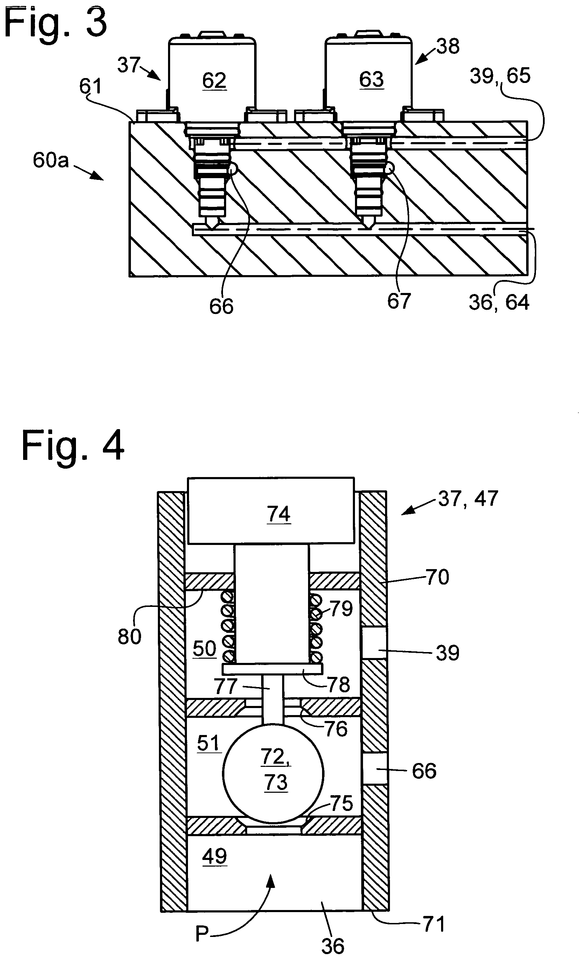

Die Schaltventile 37, 38 sind als 3/2-Wegeventile 47, 48 ausgebildet. Jedes der Schaltventile 37, 38 übernimmt dabei die Funktion eines Druckbegrenzungsventils. Die baulichen Einzelheiten hierzu werden in Zusammenhang mit Fig. 4 näher beschrieben werden; zunächst genügt es, dass im Gegensatz zum bekannten Stand der Technik zwischen der für die Druckversorgungsleitung 36 normalerweise geschlossenen Stellung 49 und der bei Schaltung der Schaltventile 37, 38 für die Druckversorgungsleitung 36 offenen Stellung 50 eine Zwischenstellung 51 vorgesehen ist, bei der die Druckversorgungsleitung 36 mit dem Rücklauf 39 verbunden ist. Dieser Zustand stellt sich im Normalbetrieb nur bei Überdruck ein. In einer derartigen Situation sind nicht nur Druckversorgungsleitung 36 und Rücklauf 39 miteinander verbunden, es wird auch Druck in die Arbeitsräume 40, 41 geleitet. Normalerweise, d. h. beim Stand der Technik, bestünde hier nun die Gefahr, dass bei Druckbeaufschlagung beider Arbeitsräume die Kolbenstange bewegt werden könnte, da beim Stand der Technik -wie oben ausgeführt- regelmäßig Differentialzylinder 12 mit unterschiedlichen Wirkflächen verwendet werden. Bei dem bevorzugt eingesetzten, als Gleichlaufzylinder 42 ausgebildeten Schaltzylinder 32 sind die Gegebenheiten aber so, dass die Kolbenflächen 44, 45 die gleiche Wirkfläche aufweisen. Werden beide Arbeitsräume 40, 41 nun mit hydraulischem Druck beaufschlagt, kommt es auf Grund der gleichen Wirkflächen dazu, dass der Kolben 43 des Gleichlaufzylinders 42 in einer mittleren, neutralen Stellung verharren wird, wodurch gewährleistet ist, dass das Stellelement 28 nicht in eine Stellung verschoben werden kann, in welcher eine Gasse 30 geschaltet werden könnte.

In baulicher Hinsicht sind zwei Ausführungsbeispiele der erfindungsgemäßen Anordnung 31 in den Figuren 2 und 3 dargestellt.

In Fig. 2 ist ein erstes Ausführungsbeispiel einer Baueinheit 60 der Anordnung 31 dargestellt. Diese entspricht weitestgehend der Baueinheit 20 gemäß dem Stand der Technik nach Figur 1 b. Entsprechend weist die Baueinheit 60 ein Trägerteil 61 auf. In Bohrungen sind ebenfalls als Magnetventilpatronen 62, 63 ausgebildete Schaltventile 37, 38 eingesetzt. Gleich sind auch die als Kanäle 64, 65 ausgebildeten Druckversorgungsleitung 36 bzw. Rücklauf 39 und die quer verlaufenden Bohrungen 66, 67, welche die Anschlüsse der Schaltventile 37, 38 zu den Arbeitsräumen 40 ,41 des Schaltzylinders 32 bilden. Gleichfalls vorhanden ist eine Bohrung 68, in welche jedoch nicht -wie im Stand der Technik gemäß Fig. 1b - ein Druckbegrenzungsventil 17 eingesetzt ist, sondern eine einfache Schraube 69, welche nur zu Servicezwecken benötigt wird. Denn bei Reparaturen am Getriebe 19 bzw. an der Baueinheit 60 kann es wünschenswert sein, das System drucklos zu machen, Hydraulikflüssigkeit zu tauschen oder zu sonstigen Zwecken Zugang zu den Hydraulikbohrungen zu erhalten. In diesem Fall wird die Schraube 69 einfach herausgeschraubt und das System drucklos gemacht.

In Fig. 3 ist ein zweites Ausführungsbeispiel einer Baueinheit 60a der erfindungsgemäßen Anordnung 31 dargestellt. Diese weist, bis auf die Schraube 69, alle Komponenten der Baueinheit 60 aus Fig. 2 auf, so dass diesbezüglich das im Zusammenhang zur Fig. 2 gesagte gilt. Lediglich auf die Bohrung 68 und auf die in diese eingesetzte Schraube 69 wurde bei diesem Ausführungsbeispiel verzichtet, so dass eine besonders kompakt aufgebaute Baueinheit 60a geschaffen ist.

In Fig. 4 ist schematisch der innere und hier wesentliche Aufbau eines der Schaltventile 37 dargestellt. Das in Fig. 4 nicht dargestellte Schaltventil 38 ist entsprechend aufgebaut.

Das Schaltventil 37 weist einen im Wesentlichen zylindrischen Ventilkörper 70 auf, welcher in Fig. 4 nur teilweise dargestellt ist. Durch ein unteres Ende 71 des Ventilkörpers 70 strömt Hydraulikflüssigkeit aus dem Kanal 64 der Druckversorgungsleitung 36 in den Ventilkörper 70 des Schaltventils 37, was durch den Pfeil P angedeutet ist. Ein Ventilkolben 72 in Form einer Kugel 73 ist im Normalbetrieb des Schaltventils 37 von einer unteren, normalerweise geschlossenen Position 49 durch einen nur angedeuteten Schaltmagneten 74 in eine obere, geschlossene Stellung 50 schaltbar. Entsprechend ist ein unterer Ventilsitz 75, und ein oberer Ventilsitz 76 vorgesehen, durch welche der Rücklauf 39, die Druckversorgungsleitung 36 und die zum Arbeitsraum 40 des Gleichlaufzylinders 42 führende Bohrung 66 miteinander verbindbar bzw. voneinander trennbar sind.

Der Ventilkolben 72 ist über eine Kolbenstange 77 mit einem Teller 78 verbunden, auf welchem sich eine Druckfeder 79 abstützt, wobei ein dem Teller 78 gegenüber gelegenes Ende der Druckfeder 79 sich gegen einen Federteller 80 abstützt. Der Federteller 80 ist dabei fest mit dem Ventilkörper 70 verbunden. Die Druckfeder 79 trägt insbesondere dafür Sorge, dass bei ausgeschaltetem Schaltmagneten 74 sich die Kugel 73 des Ventilkolbens 72 fest gegen den Ventilsitz 75 presst und somit die Zuleitung 66 zum Arbeitsraum 40 des Gleichlaufzylinders 42 verschließt. Wird entsprechend eine nicht dargestellte elektromagnetische Spule des Schaltmagneten 74 bestromt, wird der Ventilkolben 72 gegen den Widerstand der Druckfeder 79 angezogen, legt sich fest an den Ventilsitz 76, wodurch die Zuleitung 66 zum Arbeitsraum 40 des Gleichlaufzylinders 42 geöffnet und der Rücklauf 39 geschlossen wird.

Entsprechend den beiden normalen Schaltstellungen ergibt sich die geschlossene Stellung 49 bzw. die offene Stellung 50 in den entsprechenden Arbeitskammern des Ventilkörpers 70.

Die Komponenten des Schaltventils 37 sind dabei auf einen normalen Betriebsdruck von etwa 80 bar ausgelegt. Die Druckfeder 79 ist dabei so eingestellt, dass sie bei Normaldruck unter den zuvor beschriebenen Bedingungen arbeitet und entweder die geschlossene oder die offene Stellung des Schaltventils 37 gewährleistet. Die Druckfeder 79 ist aber im Gegensatz zu normalen 2/2-Wegeventilen so abgestimmt, dass bei Überdruck in der Größenordnung ab etwa 100 bar die geschlossene Stellung 49 nicht mehr vollständig aufrechterhält. Bei entsprechendem Druck P auf die Kugel 73 wird diese gegen die Druckfeder 79 leicht vom Ventilsitz 75 angehoben, so dass dann Hydraulikflüssigkeit über den Ventilsitz 75 und über den Ventilsitz 76 jeweils zum Rücklauf 39 und in die Leitung 66 zum Arbeitsraum 40 des Gleichlaufszylinders 42 strömen kann. Diese mittlere Stellung 51 ist in Fig. 4 dargestellt; hierbei sind alle Anschlüsse 36, 39, 66 miteinander verbunden.

### Bezugszeichenliste

- 1: Anordnung
- 2: Schaltzylinder
- 3: Hydraulikspeicher
- 4: Motor
- 5: Hydraulikpumpe
- 6: Druckversorgungsleitung
- 7: Schaltventil
- 8: Schaltventil
- 9: Rücklauf
- 10: Arbeitsraum
- 11: Arbeitsraum
- 12: Differentialzylinder
- 13: Kolben
- 14: Kolbenfläche
- 15: Kolbenfläche
- 16: Kolbenstange
- 17: Druckbegrenzungsventil
- 18: Schaltanordnung
- 19: Getriebe
- 20: Baueinheit
- 21: Trägerteil
- 22: Magnetventilpatrone
- 23: Magnetventilpatrone
- 24: Kanal
- 25: Kanal
- 26: Bohrung
- 27: Bohrung
- 28: Stellelement
- 29: Schaltgabel
- 30: Gasse
- 31: Anordnung
- 32: Schaltzylinder
- 33: Hydraulikspeicher
- 34: Motor
- 35: Hydraulikpumpe
- 36: Druckversorgungsleitung
- 37: Schaltventil
- 38: Schaltventil
- 39: Rücklauf
- 40: Arbeitsraum
- 41: Arbeitsraum
- 42: Gleichlaufzylinder
- 43: Kolben
- 44: Kolbenfläche
- 45: Kolbenfläche
- 46: Kolbenstange
- 46a: Kolbenstange
- 47: 3/2-Wegeventil
- 48: 3/2-Wegeventil
- 49: geschlossene Stellung
- 50: offene Stellung
- 51: mittlere Stellung
- 52 53 54 55 56 57 58 59 60: Baueinheit
- 60a: Baueinheit
- 61: Trägerteil
- 62: Magnetventilpatrone
- 63: Magnetventilpatrone
- 64: Kanal
- 65: Kanal
- 66: Bohrung
- 67: Bohrung
- 68: Bohrung
- 69: Schraube
- 70: Ventilkörper
- 71: unteres Ende
- 72: Ventilkolben
- 73: Kugel
- 74: Schaltmagnet
- 75: Ventilsitz
- 76: Ventilsitz
- 77: Kolbenstange
- 78: Teller
- 79: Druckfeder
- 80: Federteller
- P: Pfeil (hydraulischer Druck)

## Patentansprüche

1. Anordnung (31) zur Ansteuerung eines doppeltwirkenden Schaltzylinders (32) einer Schaltanordnung (18) eines automatisierten Getriebes (19) eines Kraftfahrzeuges, mit einem Hydraulikflüssigkeitsspeicher (33) mit einer motorisch angetriebene Hydraulikpumpe (35), und mit zwei jeweils an eine Druckversorgungsleitung (36) der Hydraulikpumpe (35) und an einen Rücklauf (39) zum Hydraulikflüssigkeitsspeicher (33) angeschlossenen Schaltventilen (37, 38), wobei der Schaltzylinder (32) zwei Arbeitsräume (40, 41) aufweist, welche jeweils an ein Schaltventil (37; 38) angeschlossen sind, wobei die Schaltventile (37, 38) jeweils einen Arbeitsraum (40; 41) des Schaltzylinders (32) mit der Druckversorgungsleitung (36) der Hydraulikpumpe (35) oder mit dem Rücklauf (39) zum Hydraulikflüssigkeitsspeicher (33) verbinden, wobei wenigstens ein Druckbegrenzungsventil in der Anordnung (31) vorgesehen ist, welches bei Vorhandensein eines hydraulischen Überdrucks die Druckversorgungsleitung (36) mit dem Rücklauf (39) verbindet, **dadurch gekennzeichnet, dass** die Schaltventile (37, 38) jeweils als 3/2-Wege-Ventil (47, 48) mit integriertem Druckbegrenzungsventil ausgebildet sind.

2. Anordnung nach Anspruch 1, **dadurch gekennzeichnet, dass** bei den 3/2-WegeVentilen (47, 48) jeweils zwischen einer für die Druckversorgungsleitung (36) normalerweise geschlossenen Stellung (49) und einer bei Schaltung der Schaltventile (37, 38) für die Druckversorgungsleitung (36) offenen Stellung (50) eine Zwischenstellung (51) vorgesehen ist, bei welcher die Druckversorgungsleitung (36) mit dem Rücklauf (39) und bei welcher das jeweilige 3/2-Wege-Ventil (47, 48) mit einem Arbeitsraum (40; 41) des Schaltzylinders (32) verbunden ist.

3. Anordnung nach Anspruch 1 oder 2, **dadurch gekennzeichnet, dass** der Schaltzylinder (32) als Gleichlaufzylinder (42) mit gleichen Wirkflächen ausgebildet ist.

4. Anordnung nach Anspruch 2 oder 3, **dadurch gekennzeichnet, dass** das Schaltventil (37; 38) jeweils einen Ventilkörper (70) mit darin angeordnetem Ventilkolben (72) aufweist, welcher im Normalbetrieb des Schaltventils (37; 38) von einer unteren, normalerweise geschlossenen Position (49) durch einen Schaltmagneten (74) in eine obere, geschlossene Stellung (50) schaltbar ist, wobei im Ventilkörper (70) ein unterer Ventilsitz (75) und ein oberer Ventilsitz (76) vorgesehen sind, durch welche der Rücklauf (39), die Druckversorgungsleitung (36) und die zu einem Arbeitsraum (40; 41) des Schaltzylinders (32; 42) führende Bohrung (66) miteinander verbindbar bzw. voneinander trennbar sind, wobei eine Druckfeder (79) auf den Ventilkolben (72) wirkt, welche den Ventilkolben (72) bei nicht geschaltetem Zustand (49) und bei normalen Druckverhältnissen gegen den unteren Ventilsitz (75) presst.

5. Anordnung nach Anspruch 4, **dadurch gekennzeichnet, dass** die Druckfeder (79) so eingestellt ist, dass bei Erreichen eines Überdrucks der Ventilkolben (72) von seinem unteren Ventilsitz (75) so abhebt, dass Rücklauf (39), die Druckversorgungsleitung (36) und die zu einem Arbeitsraum (40; 41) des Schaltzylinders (32; 42) führende Bohrung (66) miteinander verbunden sind.

6. Anordnung nach wenigstens einem der Ansprüche 1 - 5, **dadurch gekennzeichnet, dass** die Schaltventile (37, 38) jeweils als Ventilpatronen (62, 63) ausgebildet sind welche in Bohrungen eines Trägerteils (61) einer Baueinheit (60; 60a) eingeschraubt sind, wobei die Ventilpatronen (62, 63) jeweils in Verbindung mit dem Rücklauf (39), der Druckversorgungsleitung (36) und zu jeweils einem Arbeitsraum (40; 41) des Schaltzylinders (32; 42) führenden Bohrungen (66; 67) stehen.

7. Anordnung nach Anspruch 6, **dadurch gekennzeichnet, dass** der Rücklauf (39) und die Druckversorgungsleitung (36) jeweils als Kanal (64, 65) ausgebildet sind, welche in das Trägerteil (61) eingebohrt sind.

8. Anordnung nach Anspruch 7, **dadurch gekennzeichnet, dass** in das Trägerteil (61) parallel zu den Ventilpatronen (62, 63) eine Bohrung (68) eingebracht ist, wobei die Kanäle (64, 65) in die Bohrung (68) münden und wobei die Bohrung (68) durch eine Schraube (69) lösbar verschlossen ist.

## Claims

1. Assembly (31) for actuating a double-acting shift cylinder (32) of a shift assembly (18) of an automated transmission (19) of a motor vehicle, comprising a hydraulic fluid reservoir (33) having a motor-driven hydraulic pump (35), and two control valves (37, 38) each connected to a pressure supply line (36) of the hydraulic pump (35) and to a return line (39) to the hydraulic fluid reservoir (33), the shift cylinder (32) having two working chambers (40, 41) which are connected to respective control valves (37; 38), the control valves (37, 38) connecting respective working chambers (40; 41) of the shift cylinder (32) to the pressure supply line (36) of the hydraulic pump (35) or to the return line (39) to the hydraulic fluid reservoir (33), at least one pressure-limiting valve which in the presence of a hydraulic overpressure connects the pressure supply line (36) to the return line (39) being provided in the assembly (31), **characterized in that** the control valves (37, 38) are each in the form of a 3/2-directional control valve (47, 48) having an integrated pressure-limiting valve.

2. Assembly according to claim 1, **characterized in that** for each of the 3/2-directional control valves (47, 48) there is provided a middle position (51) between a normally closed position (49) for the pressure supply line (36) and an open position (50) for the pressure supply line (36) upon switching of the control valves (37, 38), in which middle position (51) the pressure supply line (36) is connected to the return line (39) and the respective 3/2-directional control valve (47, 48) is connected to a working chamber (40; 41) of the shift cylinder (32).

3. Assembly according to Claim 1 or 2, **characterized in that** the shift cylinder (32) is in the form of a synchronous cylinder (42) having equal effective areas.

4. Assembly according to Claim 2 or 3, **characterized in that** each control valve (37; 38) has a valve body (70) with a valve piston (72) arranged therein, which valve piston (72), in normal operation of the control valve (37; 38), can be switched by a solenoid (74) from a lower, normally closed position (49) to an upper, closed position (50), there being provided in the valve body (70) a lower valve seat (75) and an upper valve seat (76) by which the return line (39), the pressure supply line (36) and the bore (66) leading to a working chamber (40; 41) of the shift cylinder (32; 42) can be connected to or disconnected from one another, a compression spring (79) acting on the valve piston (72) and pressing the valve piston (72) against the lower valve seat (75) in the unswitched state (49) and under normal pressure conditions.

5. Assembly according to Claim 4, **characterized in that** the compression spring (79) is set in such a way that, upon attainment of an overpressure, the valve piston (72) is lifted from its lower valve seat (75) in such a way that the return line (39), the pressure supply line (36) and the bore (66) leading to a working chamber (40; 41) of the shift cylinder (32; 42) are connected to one another.

6. Assembly according to at least one of Claims 1 to 5, **characterized in that** the control valves (37, 38) are each in the form of valve cartridges (62, 63) which are screwed into bores of a carrier part (61) of a subassembly (60; 60a), the valve cartridges (62, 63) each being connected to the return line (39), to the pressure supply line (36) and to bores (66; 67) leading to a respective working chamber (40; 41) of the shift cylinder (32; 42).

7. Assembly according to Claim 6, **characterized in that** the return line (39) and the pressure supply line (36) are each in the form of passages (64, 65) bored in the carrier part (61).

8. Assembly according to Claim 7, **characterized in that** a bore (68) is formed in the carrier part (61) parallel to the valve cartridges (62, 63), the passages (64, 65) opening into the bore (68) and the bore (68) being closed releasably by a screw (69).

## Revendications

1. Agencement (31) pour commander un vérin de changement de vitesses à double action (32) d'un agencement de changement de vitesses (18) d'une transmission automatisée (19) d'un véhicule automobile, comprenant un accumulateur de fluide hydraulique (33) avec une pompe hydraulique (35) à commande par moteur et avec deux soupapes de commutation (37, 38) raccordées à chaque fois à une conduite d'alimentation en pression (36) de la pompe hydraulique (35) et à un retour (39) vers l'accumulateur de fluide hydraulique (33), le vérin de changement de vitesses (32) présentant deux espaces de travail (40, 41) qui sont chacun raccordés à une soupape de commutation (37 ; 38), les soupapes de commutation (37, 38) reliant à chaque fois un espace de travail (40 ; 41) du vérin de changement de vitesses (32) à la conduite d'alimentation en pression (36) de la pompe hydraulique (35) ou au retour (39) vers l'accumulateur de fluide hydraulique (33), au moins une soupape de limitation de la pression étant prévue dans l'agencement (31), laquelle, en présence d'une surpression hydraulique, relie la conduite d'alimentation en pression (36) au retour (39), **caractérisé en ce que** les soupapes de commutation (37, 38) sont réalisées à chaque fois sous forme de soupapes à 3/2 voies (47, 48) avec une soupape de limitation de pression intégrée.

2. Agencement selon la revendication 1, **caractérisé en ce que** dans le cas des soupapes à 3/2 voies (47, 48) une position intermédiaire (51) est prévue à chaque fois entre une position (49) normalement fermée pour la conduite d'alimentation en pression (36) et une position (50) ouverte lors de la commutation des soupapes de commutation (37, 38) pour la conduite d'alimentation en pression (36), à laquelle position intermédiaire la conduite d'alimentation en pression (36) est connectée au retour (39) et à laquelle la soupape à 3/2 voies respective (47, 48) est connectée à un espace de travail (40 ; 41) du vérin de changement de vitesses (32).

3. Agencement selon la revendication 1 ou 2, **caractérisé en ce que** le vérin de changement de vitesses (32) est réalisé sous forme de vérin synchrone (42) avec des surfaces d'action identiques.

4. Agencement selon la revendication 2 ou 3, **caractérisé en ce que** la soupape de commutation (37 ; 38) présente à chaque fois un corps de soupape (70) avec un piston de soupape (72) disposé dans celui-ci, lequel peut être commuté pendant le fonctionnement normal de la soupape de commutation (37 ; 38) d'une position inférieure, normalement fermée (49) par un aimant de commutation (74) dans une position supérieure fermée (50), un siège de soupape inférieur (75) et un siège de soupape supérieur (76) étant prévus dans le corps de soupape (70), par le biais desquels le retour (39), la conduite d'alimentation en pression (36) et l'alésage (66) conduisant à un espace de travail (40 ; 41) du vérin de changement de vitesses (32 ; 42) peuvent être connectés les uns aux autres ou peuvent être séparés les uns des autres, un ressort de pression (79) agissant sur le piston de soupape (72), lequel presse le piston de soupape (72), dans l'état non commuté (49) et dans des conditions de pression normales, contre le siège de soupape inférieur (75).

5. Agencement selon la revendication 4, **caractérisé en ce que** le ressort de pression (79) est ajusté de telle sorte qu'à l'obtention d'une surpression, le piston de soupape (72) se soulève de son siège de soupape inférieur (75) de telle sorte que le retour (39), la conduite d'alimentation en pression (36) et l'alésage (66) conduisant à un espace de travail (40 ; 41) du vérin de changement de vitesses (32 ; 42) soient connectés les uns aux autres.

6. Agencement selon au moins l'une quelconque des revendications 1 à 5, **caractérisé en ce que** les soupapes de commutation (37, 38) sont réalisées à chaque fois sous forme de cartouches de soupape (62, 63) qui sont vissées dans des alésages d'une partie de support (61) d'une unité constructive (60 ; 60a), les cartouches de soupape (62, 63) étant à chaque fois en liaison avec le retour (39), la conduite d'alimentation en pression (36) et des alésages (66 ; 67) conduisant chacun à un espace de travail (40 ; 41) du vérin de changement de vitesses (32 ; 42).

7. Agencement selon la revendication 6, **caractérisé en ce que** le retour (39) et la conduite d'alimentation en pression (36) sont réalisés à chaque fois sous forme de canaux (64, 65) qui sont percés dans la partie de support (61).

8. Agencement selon la revendication 7, **caractérisé en ce que** dans la partie de support (61), parallèlement aux cartouches de soupape (62, 63), est réalisé un alésage (68), les canaux (64, 65) débouchant dans l'alésage (68) et l'alésage (68) étant fermé de manière non permanente par une vis (69).
